(19) Europäisches Patentamt
European Patent Office
Office européen des brevets

(11) EP 2 022 651 B1

(12) # EUROPEAN PATENT SPECIFICATION

(45) Date of publication and mention of the grant of the patent:
**17.10.2012 Bulletin 2012/42**

(21) Application number: **07744311.7**

(22) Date of filing: **29.05.2007**

(51) Int Cl.:
***B60C 9/00*** *(2006.01)* ***B60C 9/08*** *(2006.01)*
***B60C 17/00*** *(2006.01)*

(86) International application number:
**PCT/JP2007/060891**

(87) International publication number:
**WO 2007/142077 (13.12.2007 Gazette 2007/50)**

(54) **RUN-FLAT PNEUMATIC RADIAL TIRE**

RUN-FLAT-RADIALLUFTREIFEN

BANDAGE PNEUMATIQUE RADIAL

(84) Designated Contracting States:
**DE ES FR GB IT**

(30) Priority: **06.06.2006 JP 2006157752**

(43) Date of publication of application:
**11.02.2009 Bulletin 2009/07**

(73) Proprietor: **Bridgestone Corporation**
**Tokyo 104-0031 (JP)**

(72) Inventor: **YAMAMOTO, Masahiko**
**Kodaira-shi, Tokyo 187-0031 (JP)**

(74) Representative: **Oxley, Robin John George**
**Marks & Clerk LLP**
**90 Long Acre**
**London**
**WC2E 9RA (GB)**

(56) References cited:

**EP-A2- 0 963 863** **WO-A1-2006/077973**
**DE-A1- 4 115 874** **JP-A- 2000 264 012**
**JP-A- 2001 164 422** **JP-A- 2001 262 437**
**JP-A- 2002 339 275** **JP-A- 2003 013 326**
**JP-A- 2004 091 969** **JP-A- 2004 306 658**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention relates to a pneumatic run-flat radial tire of a so-called side reinforcing type, which is enabled by reinforcing its side wall portions to run in a flat tire condition when the inner pressure of the tire is abnormally lowered or the tire is punctured. More specifically, it relates to a pneumatic run-flat radial tire (hereinafter also briefly referred to as "run-flat tire") which is improved in durability upon running.

### Background Art

There are proposed a variety of tires, so-called "run-flat tires", which can run in the flat tire condition and enable a safe run of a distance even if the inner pressure is abnormally lowered or the tires are punctured. They are proposed typically as summer tires to run on regular paved road surfaces. These are roughly classified into a tire of support ring type and a tire of side reinforcing type.

The tire of support ring type is a run-flat tire which includes a support attached to the tire mounted to a rim. The support is configured to come in contact with the inner face of the tire only when the inner pressure is abnormally lowered or the tire is punctured, to thereby support the punctured tire from its inner face. This enables a run-flat run.

However, the run-flat tire of this type is poor in workability when the tire is mounted to a rim, because the support should be assembled simultaneously when the tire is mounted to the rim, and this also invites increase in weight and cost. Additionally, this technique requires much effort and time typically in its production process and the like.

In contrast, the side reinforcing type run-flat tire can solve all the problems occurring in the tire of support ring type. In the side reinforcing type tire, the side wall portions are reinforced by arranging a reinforcing rubber layer having a relatively high hardness at least on the inner face of a carcass residing in the side wall portions. The both side wall portions are reinforced by the reinforcing rubber layer, thereby become resistant to deformation, and act to support the load when the inner pressure is abnormally lowered or the tire is punctured. This enables a run-flat run (see, for example, Patent Document 1).

Patent Document 1: Japanese Unexamined Patent Application Publication No. 2000-309211

Further known patent documents DE 41 15 874 A1 and EP 0963 863 A2 concern run-flat tires devised for high-temperature behaviour.

### Disclosure of Invention

### Problems to be Solved by the Invention

However, it may occur in this self-supporting run-flat (SSR) tire of side reinforcing type that the tire shows an increased deflection when the tire is punctured and has a lowered inner pressure; the reinforcing rubber layer generates heat by itself due to deflection and is thereby softened to invite further increased deflection; this leads to breakage, and the vehicle maybe fail to run within a relatively short time. In the case of the side reinforcing type, the run-flat durability thereof upon practical use should be achieved by thickening the reinforcing rubber layer. However, the weight is increased naturally to raise the rolling resistance so that the ride comfort becomes worse.

Accordingly, an object of the present invention is to provide a pneumatic run-flat radial tire of side reinforcing type, which has significantly improved run-flat durability without adversely affecting actual vehicle properties such as ride comfort.

### Means for Solving the Problems

After intensive investigations to prevent a reinforcing rubber layer from softening due to self-heating and from increasing in deflection, the present inventor found that the above object can be achieved by controlling the thermal shrinkage stress of a carcass ply cord and the dynamic storage modulus of elasticity E' of the reinforcing rubber layer within specific ranges under specific conditions. The present invention has been made based on these findings.

Specifically, according to the present invention, there is provided a pneumatic run-flat radial tire which includes a carcass layer; a main belt; a tread portion; a side wall portion; and a reinforcing rubber layer, in which the carcass layer includes at least one radial carcass ply with cords that are substantially radially arranged between a pair of bead cores embedded respectively in a pair of bead portions, the main belt is arranged on an outer periphery of a crown portion of the carcass and includes at least two inclined belt layers each containing cords extending in parallel in an

inclined direction with respect to an equatorial plane of the tire, the tread portion is reinforced by the main belt, the side wall portion connects between the tread portion and the bead portions, and the reinforcing rubber layer is arranged in an inner face of the carcass extending at least to the side wall portion and has a substantially crescent cross section, in which a cord having a difference in thermal shrinkage stress between at 30°C and at 80°C of $3.0 \times 10^{-2}$ cN/dtex or more is used as the cords constituting the at least one carcass ply of the carcass layer, the slope α of decreasing rate (%) of the dynamic storage modulus of elasticity E' of the reinforcing rubber layer from 30°C to 50°C satisfies the following condition:

$$\alpha \leq -3.0 \times 10^{-2} \; [\%]/[\mathrm{deg}],$$

and the slope β of decreasing rate (%) of the dynamic storage modulus of elasticity E' of the reinforcing rubber layer from 50°C to 80°C satisfies the following condition:

$$\beta \geq -8.0 \times 10^{-2} \; [\%]/[\mathrm{deg}].$$

The slopes α and β herein are determined in the following manner. Specifically, when E' at 30°C, E' at 50°C, and E' at 80°C are indicated as E'(30), E'(50), and E'(80), respectively, and assuming that the index of E'(30) is 100, the index A of E'(50) and the index B of E'(80) are indicated by the following equations:

$$A = (E'(50)/E'(30)) \times 100$$

$$B = (E'(80)/E'(30)) \times 100.$$

Accordingly, α and β can be determined based on these indices according to the following equations:

$$\alpha = (A - 100)/(50 - 30) \; [\%]/[\mathrm{deg}]$$

$$\beta = (B - A)/(80 - 50) \; [\%]/[\mathrm{deg}].$$

In the pneumatic run-flat radial tire according to the present invention, the at least one carcass ply cord is preferably a cord containing 50% by mass or more of a polyketone fiber. The polyketone fiber preferably has a tensile strength of 10 cN/dtex or more, preferably has an elastic modulus of 200 cN/dtex or more, and preferably has a thermal shrinkage upon dry heat treatment at 150°C for 30 minutes of from 1% to 5%. A cord having a difference in thermal shrinkage stress between at 30°C and at 80°C of $7.0 \times 10^{-2}$ cN/dtex or more is preferably used as the cords constituting the at least one carcass ply of the carcass layer. In addition, α and β preferably satisfy the following conditions:

$$\alpha < -4.5 \times 10^{-2} \; [\%]/[\mathrm{deg}]$$

$$\beta > -7.4 \times 10^{-2} \; [\%]/[\mathrm{deg}]$$

Advantages

According to the present invention, the run-flat durability of a run-flat tire of side reinforcing type can be significantly improved without adversely affecting actual vehicle properties such as ride comfort.

Brief Description of Drawings

Fig. 1 is a semi-sectional view in a width direction of a run-flat tire according to a preferred embodiment of the present invention.

Reference Numerals

| | |
|---|---|
| 1 | run-flat tire |
| 2 | bead portion |
| 3 | bead core |
| 4 | bead filler |
| 5 | carcass |
| 6 | crown portion |
| 7a, 7b | inclined belt layer |
| 8 | main belt |
| 9 | tread portion |
| 10 | belt protecting layer |
| 12 | side wall portion |
| 13 | reinforcing rubber layer |
| E | tire equatorial plane |

Best Modes for Carrying Out the Invention

Some preferred embodiments of the present invention will be illustrated in detail with reference to the attached drawing.

Fig. 1 depicts a representative semi-sectional view in a width direction of a run-flat tire according to a preferred embodiment of the present invention. The run-flat tire 1 in Fig. 1 includes a pair of bead portions 2; a pair of bead cores 3 embedded in the pair of bead portions 2 respectively; a pair of bead fillers 4; and a carcass 5 which includes at least one ply (one in the illustrated embodiment) having cords that are substantially radially arranged between the bead cores 3 (specifically, arranged at angles of 70° to 90° with respect to the tire equatorial plane E). The carcass 5 is formed by winding up the at least one ply around the bead core 3 and the bead filler 4 from the inner side to the outer side.

The tire 1 further has a tread portion 9 on an outer periphery of a crown portion 6 of the carcass 5. The tread portion 9 is reinforced by a main belt 8. The main belt 8 includes at least two inclined belt layers (two inclined belt layers 7a and 7b in the illustrated embodiment in Fig. 1) having cords that are arranged in parallel and extend diagonally with respect to the tire equatorial plane E.

Of inclined belt layers constituting the main belt 8, at least two inclined belt layers 7a and 7b preferably constitute intersecting belts in which their cords are laminated so as to intersect with each other with the interposition of the tire equatorial plane E.

Although not shown in the figure, the tread portion 9 is appropriately provided with tread grooves such as two or more circumferential grooves extending in a tire circumferential direction and/or two or more transversal grooves extending in such a direction as to cross the circumferential grooves; and two or more sipes, as in regular tires.

Fig. 1 illustrates an embodiment in which a belt protecting layer 10 is arranged between the main belt 8 and the tread portion 9 so as to cover substantially the entire width of the main belt 8. The belt protecting layer 10 includes cords arranged substantially in parallel with the tire equatorial plane E. The belt protecting layer 10 is arranged in order to prevent a failure of the tire caused by belt edge separation, can be suitably arranged according to necessity, and has only to be arranged at least on both ends of the main belt 8.

A pair of side wall portions 12 is arranged each between the both ends of the tread portion 9 and the bead portions 2. In addition, a reinforcing rubber layer 13 having a substantially crescent section is arranged at least in the inner face of the carcass 5 extending to the side wall portion 12. Thus, the tire has a run-flat tire structure of so-called side reinforcing type.

According to the present invention, good ride comfort not upon run-flat run but upon regular run can be maintained, since the slope $\alpha$ of decreasing rate (%) of the dynamic storage modulus of elasticity E' of the reinforcing rubber

layer 13 from 30°C to 50°C and the slope P of decreasing rate (%) of the dynamic storage modulus of elasticity E' of the reinforcing rubber layer 13 from 50°C to 80°C respectively satisfy the following conditions:

$$\alpha \leq -3.0 \times 10^{-2}\ [\%]/[\mathrm{deg}]$$

$$\beta \geq -8.0 \times 10^{-2}\ [\%]/[\mathrm{deg}]$$

and preferably satisfy the following conditions:

$$\alpha < -4.5 \times 10^{-2}\ [\%]/[\mathrm{deg}]$$

$$\beta > -7.4 \times 10^{-2}\ [\%]/[\mathrm{deg}]$$

The formulation of a rubber composition constituting the reinforcing rubber layer 13 should not be particularly limited and can be appropriately selected according to a common procedure.

According to the present invention, a cord having a difference in thermal shrinkage stress between at 30°C and at 80°C of $3.0 \times 10^{-2}$ cN/dtex or more, preferably $7.0 \times 10^{-2}$ cN/dtex or more, is used as the cords constituting the carcass ply of the carcass layer 5. A cord, if having a difference in thermal shrinkage stress between at 30°C and at 80°C of less than $3.0 \times 10^{-2}$ cN/dtex, may give an insufficient reaction force to suppress the deflection of the side portion due to thermal shrinkage of the carcass ply cord residing at the pulling side upon bending of the reinforcing rubber layer, thus the insufficient reaction force may not sufficiently suppress the deflection and thereby not sufficiently suppress the heat generation of the tire. This may result in insufficiently effectively improved run-flat durability of the tire.

The carcass ply cord is preferably a cord containing preferably 50% by mass or more, more preferably 70% by mass or more, and further preferably 100% by mass of a polyketone fiber. A cord, if containing 50% by mass or more of a polyketone fiber, will contribute to good properties including strength and thermal stability of the tire, and adhesion with a rubber.

The tensile strength of the polyketone fiber contained in the carcass ply cord is preferably 10 cN/dtex or more and more preferably 15 cN/dtex or more. A polyketone fiber, if having a tensile strength of less than 10 cN/dtex, may cause an insufficient strength and an increased total weight of the tire.

The elastic modulus of the polyketone fiber contained in the carcass ply cord is preferably 200 cN/dtex or more, and more preferably 250 cN/dtex or more. A polyketone fiber, if having an elastic modulus of less than 200 cN/dtex, may not sufficiently contribute to maintenance of the tire shape.

The thermal shrinkage of the polyketone fiber contained in the carcass ply cord upon dry heat treatment at 150°C for 30 minutes is preferably from 1% to 5%, and more preferably from 2% to 4%. A polyketone fiber, if having a thermal shrinkage upon dry heat treatment at 150°C for 30 minutes of less than 1%, may be parallelized significantly inefficiently upon heating during tire production, and the tire may have an insufficient strength. In contrast, a polyketone fiber, if having a thermal shrinkage upon dry heat treatment at 150°C for 30 minutes of more than 5%, may cause remarkable shrinkage of the cord as a result of heating during tire production, and the product tire may have a deteriorated shape.

Next, fibers usable in the present invention, which contain 50% by mass or more of a polyketone fiber (hereinafter briefly referred to as "PK fiber") will be illustrated in detail.

Exemplary fibers other than PK fibers usable in the present invention include nylon fibers, ester fibers, rayon fibers, polynosic fibers, lyocell fibers, and vinylon fibers.

The dry-thermal shrinkage of a PK fiber in the present invention is determined by carrying out a dry heat treatment of the fiber in an oven at 150°C for 30 minute, measuring the fiber length before and after heat treatment while applying a load of 1/30 (cN/dtex) to the fiber, and determining the dry-thermal shrinkage based on the measured fiber lengths according to the following equation:

$$\text{Dry-thermal shrinkage (\%)} = (Lb - La)/Lb \times 100$$

Wherein Lb represents the fiber length before heat treatment; and La represents the fiber length after heat treatment. The tensile strength and tensile elastic modulus of a PK fiber are values each measured according to the method specified in JIS-L-1013; and the tensile elastic modulus is an initial elastic modulus as calculated from a load at an elongation of 0.1% and a load at an elongation of 0.2%.

Specifically, the carcass ply cords for use in the present invention are preferably PK fiber cords as described in detail below. Namely, the preferred PK fiber cords are cords of multifilament twist PK fibers having a total decitex per one cord of from 1000 to 20000 decitex (dtex). Cords having a total decitex per one cord of from 1000 to 20000 dtex can provide high stiffness and can also provide a smaller weight, as a merit of organic fibers, as compared with steel cords. Cords, if having a total decitex per one cord of less than 1000 dtex, may not give sufficiently high stiffness as the carcass ply. In contrast, cords, if having a total decitex per one cord of more than 20000 dtex, may cause an excessively large gauge of the ply, and this may invite an increased tire weight and deteriorated tire quality.

The maximum thermal shrinkage stress of the cords is determined by preparing a sample of an unvulcanized PK fiber after a general dipping treatment, heating the sample, whose length is fixed at 25 cm, at a temperature rise rate of 5°C/minute, and measuring the maximum stress in unit of cN/dtex occurring in the cord at 177°C.

The cords preferably have a twist coefficient $\alpha$ of from 0.25 to 1.25, in which the twist coefficient $\alpha$ is defined according to the following equation (I):

$$\alpha = T \times \sqrt{0.126 \times D/\rho} \times 10^{-3} \qquad (I)$$

wherein T represents the number of twist (twists/100 mm); D represents the total fineness (dtex) of the cord; and p represents the density (g/cm$^3$) of the fiber material used in the cord. PK fiber cords, if having a twist coefficient $\alpha$ of less than 0.25, may not ensure a sufficient thermal shrinkage stress. In contrast, PK fiber cords, if having a twist coefficient $\alpha$ of more than 1.25, may not ensure a sufficient elastic modulus, and this may cause an insufficient reinforcing capability.

Exemplary preferred polyketones as the material for the polyketone fiber include polyketones substantially including repeating units represented by the following general formula (II):

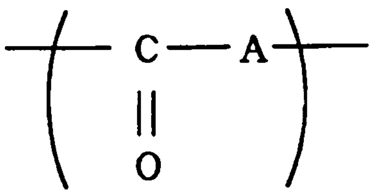

(II)

wherein A represents a moiety derived from an unsaturated compound as polymerized via an unsaturated bond, and As in the respective repeating units may be the same as or different from each other. Of these polyketones, a polyketone containing 97% by mole or more of 1-oxotrimethylene [$-CH_2-CH_2-CO-$] based on the total repeating units is preferred, a polyketone containing 99% by mole or more of 1-oxotrimethylene based on the total repeating units is more preferred, and a polyketone containing 100% by mole of 1-oxotrimethylene based on the total repeating units is most preferred.

In these polyketones, ketone groups may be partially bonded with each other, and moieties derived from the unsaturated compound may be bonded with each other. However, the percentage of portions where ketone groups and moieties derived from an unsaturated compound are arranged in alternate order is preferably 90% by mass or more, more preferably 97% by mass or more, and most preferably 100% by mass.

The unsaturated compound constituting A in formula (II) is most preferably ethylene, but it may also be other unsaturated compounds than ethylene. Exemplary other unsaturated compounds include unsaturated hydrocarbons other than ethylene, such as propylene, butene, pentene, cyclopentene, hexene, cyclohexene, heptene, octene, nonene, decene, dodecene, styrene, acetylene, and allene; and unsaturated-bond-containing compounds such as methyl acrylate, methyl methacrylate, vinyl acetate, acrylamide, hydroxyethyl methacrylate, undecenoic acid, undecenol, 6-chlorohexene, N-vinylpyrrolidone, a diethyl ester of sulnylphosphonic acid, sodium styrenesulfonate, sodium allylsulfonate, vinylpyrrolidone, and vinyl chloride.

The degree of polymerization of the polyketone is preferably such that the polyketone has a limiting viscosity

[η] of preferably from 1 to 20 dL/g and more preferably from 3 to 8 dL/g, in which the limiting viscosity is defined according to the following equation (III):

$$[\eta] = \lim_{c \to 0} \frac{(T - t)}{(t \cdot c)} \qquad \text{(III)}$$

wherein t and T represent the flow times at 25°C in a viscosity tube of hexafluoroisopropanol with purity of 98% or more and of a diluted solution of the polyketone in the hexafluoroisopropanol; and c represents the mass (g) of the solute in 100 mL of the diluted solution. A polyketone, if having a limiting viscosity of less than 1 dL/g, has an excessively small molecular weight and may thereby be difficult to give high-strength cords of polyketone fibers and may frequently cause process troubles such as fluffing and thread breakage upon spinning, drying, and drawing. In contrast, a polyketone, if having a limiting viscosity of more than 20 dL/g, may require more time and cost to synthesize the polymer, and the resulting polymer may not easily dissolved uniformly, resulting in adverse effects on spinnability and physical properties.

Additionally, the PK fiber preferably has a crystal structure with a degree of crystallinity of from 50% to 90% and a degree of crystal orientation of 95% or more. A PK fiber, if having a degree of crystallinity of less than 50%, may form an insufficient fiber structure and thereby give an insufficient strength. In addition, this PK fiber may show unstable shrinkage properties upon heating and unstable dimensional stability. Accordingly, the degree of crystallinity is preferably from 50% to 90% and more preferably from 60% to 85%.

The polyketone is preferably fiberized by a process (1) of spinning an undrawn yarn, subjecting the spun yarn to multi-step hot drawing, and carrying out drawing at a specific temperature and a specific draw ratio in the final drawing step of the multi-step hot drawing; or a process (2) of spinning an undrawn yarn, carrying out hot drawing of the spun yarn, and quenching the fiber after the completion of hot drawing, while applying a high tension to the fiber. The polyketone can be preferably fiberized by the process (1) or (2) to give desired filaments suitable for the preparation of the polyketone fiber cords.

The spinning process for the polyketone undrawn yarn is not particularly limited, and any known process can be employed. Specifically, exemplary processes include wet spinning processes using an organic solvent such as hexafluoroisopropanol or m-cresol, as described in Japanese Unexamined Patent Application Publication No. 2-112413, Japanese Unexamined Patent Application Publication No. 4-228613, and Japanese Unexamined Patent Application Publication (Translation of PCT Application) No. 4-505344; and wet spinning processes using an aqueous solution typically of a zinc salt, a calcium salt, a thiocyanic acid salt, or an iron salt, as described in PCT International Publication Number WO 99/18143, PCT International Publication Number WO 00/09611, Japanese Unexamined Patent Application Publication No. 2001-164422, Japanese Unexamined Patent Application Publication No. 2004-218189, and Japanese Unexamined Patent Application Publication No. 2004-285221. Among these processes, preferred are the wet spinning processes using aqueous solutions of salts.

By way of example, a polyketone undrawn yarn can be obtained according to a wet spinning process using an organic solvent by dissolving a polyketone polymer to a concentration of 0.25% to 20% by mass typically in hexafluoroisopropanol or m-cresol, extruding the solution via spinning nozzles into fibers, and removing the solvent and washing the fibers in a non-solvent bath such as toluene, ethanol, isopropanol, n-hexane, isooctane, acetone, or methyl ethyl ketone.

On the other hand, a polyketone undrawn yarn can be obtained according to a wet spinning process by dissolving a polyketone polymer to a concentration of from 2% to 30% by mass in an aqueous solution typically of a zinc salt, a calcium salt, a salt of thiocyanic acid, or an iron salt, extruding the solution at a temperature of from 50°C to 130°C via spinning nozzles into a coagulation bath to carry out gel spinning, and further carrying out, for example, desalting and drying. The aqueous solution in which the polyketone polymer is to be dissolved preferably contains a mixture of a zinc halide with an alkali metal halide or alkaline earth metal halide. Exemplary coagulation baths usable herein include water, aqueous solutions of metal salts, and organic solvents such as acetone and methanol.

The resulting undrawn yarn is drawn preferably by hot drawing, in which the undrawn yarn is heated and thereby drawn at a temperature higher than the glass transition temperature of the undrawn yarn. The drawing of the undrawn yarn is preferably carried out in two or more steps, although it may be carried out in one step in the process (2). The hot drawing process is not particularly limited and exemplary process include a process of allowing the yarn to travel on a heating roll or heating plate. The hot drawing is preferably conducted at a temperature of from 110°C up to the melting point of the polyketone, with a total draw ratio of preferably 10 times or more.

When the polyketone is fiberized by the process (1), the temperature in the final drawing step of the multi-step hot drawing is preferably from 110°C up to [(the drawing temperature of a drawing step immediately precedent to the final drawing step) - 3°C]. The drawing ratio in the final drawing step of the multi-step drawing is preferably from 1.01 to

1.5 times. When the polyketone is fiberized by the process (2), the tension applied to the fibers after the completion of hot drawing is preferably from 0.5 to 4 cN/dtex. The quenching is preferably carried out at a cooling rate of 30°C/second or more to a final cooling temperature of 50°C or lower. The quenching procedure of the hot-drawn polyketone fiber is not particularly limited and can be selected from among known common procedures. Specifically, a cooling procedure using a roll is preferred. The resulting polyketone fiber has a large residual elastic strain and is thereby generally preferably subjected to a thermal relaxation treatment so as to have a fiber length shorter than that after hot drawing. The thermal relaxation treatment is preferably conducted at a temperature of from 50°C to 100°C and at a relaxation ratio of from 0.980 to 0.999 times.

For most effectively utilizing the high thermal shrinkage properties of PK fiber cords, it is desirable that the working temperature during processing and the temperature upon usage of the resulting product are temperatures near to the temperature at which the thermal shrinkage stress reaches the maximum (maximum thermal shrinkage temperature). By way of specific example, a working temperature, such as a RFL (resorcinol formaldehyde latex) treatment temperature or vulcanization temperature, in an adhesive treatment carried out according to necessity is preferably from 100°C to 250°C. Additionally, the maximum thermal shrinkage temperature is preferably from 100°C to 250°C and more preferably from 150°C to 240°C, because the tire temperature may rise even to a range of from 100°C to 200°C when a tire material generates heat as a result of repeated use or high-speed rotation.

A coating rubber that covers the carcass ply cords according to the present invention can have a variety of shapes. Representative shapes thereof include a coat or a sheet. The coating rubber should not be particularly limited and can have any known rubber composition as suitably employed.

EXAMPLES

The present invention will be illustrated in detail with reference to several examples below.

(Preparation Example of PK Fibers)

A polyketone polymer as a fully alternating copolymer of ethylene and carbon monoxide, having a limiting viscosity of 5.3, was prepared according to a common procedure. The polyketone polymer was added to an aqueous solution containing 65% by weight of zinc chloride and 10% by weight of sodium chloride and dissolved therein with stirring at 80°C for 2 hours, to give a dope having a polymer concentration of 8% by weight.

The dope was heated to 80°C, filtrated through a 20-μm sintered filter, and extruded at a discharge rate of 2.5 cc/minute from a 50-hole spinneret with a hole diameter of 0.10 mm kept heat at 80°C via an air gap of 10 mm into water at 18°C containing 5% by weight of zinc chloride, while drawing at a rate of 3.2 m/minute, to give coagulated threads.

Sequentially, the coagulated threads were rinsed with an aqueous sulfuric acid solution with a concentration of 2% by weight at a temperature of 25°C, further rinsed with water at 30°C, and the resulting solidified threads were wound at a rate of 3.2 m/minute.

The wound threads were impregnated with 0.05% by weight each of IRGANOX 1098 (supplied by Ciba Specialty Chemicals K.K.) and IRGANOX 1076 (supplied by Ciba Specialty Chemicals K.K.), dried at 240°C, treated with a finishing agent, and thereby yielded undrawn yarns.

The finishing agent used had the following composition: lauryl oleate/bisoxyethyl bisphenol A/polyether (propylene oxide/ethylene oxide = 35/65, molecular weight: 20,000)/polyethylene oxide 10 mol added oleyl ether/polyethylene oxide 10 mol added castor oil ether/sodium stearylsulfonate/sodium dioctylphosphate = 30/30/10/5/23/1/1 (ratio in terms of % by weight).

The resulting undrawn yarns were subjected to first drawing at 240°C, subsequent second drawing at 258°C, third drawing at 268°C, fourth drawing at 272°C, and subsequent fifth drawing at 200°C and a drawing ratio of 1.08 times with a drawing tension of 1.8 cN/dtex, and were wound with a winder. The total drawing ratio from the undrawn yarns to the resulting drawn yarns after the fifth drawing was 17.1 times. The fibrous original yarns had satisfactory properties of a strength of 15.6 cN/dtex, an elongation percentage of 4.2%, and an elastic modulus of 347 cN/dtex. They also had a thermal shrinkage upon dry heat treatment at 150°C for 30 minutes of 4.3%. The obtained PK fibers were used as cords under the conditions mentioned below.

(EXAMPLES 1 TO 5 AND COMPARATIVE EXAMPLES 1 TO 4)

Tested tires were run-flat tires with a size of 225/45R17. They each include a radial carcass 5 composed of one carcass ply with radially arranged cords; and a reinforcing rubber layer 13 arranged on an inner face of the carcass 5. Rubber A or B in Table 1 below was used in the reinforcing rubber layer 13 of the tested tires in the manner indicated in Table 2 below. The above-prepared PK fibers were used as carcass ply cords under the conditions in Table 2. Rayon fibers were used as the cords for Comparative Examples 2 to 4 under the conditions in Table 2. The dynamic storage

modulus of elasticity E' and run-flat durability of the tested tires were evaluated in the following manner.

(Dynamic Storage Modulus of Elasticity E')

The dynamic storage modulus of elasticity E' was measured on test pieces (2 mm thick) composed of Rubbers A and B after vulcanization, respectively, using a spectrometer (supplied by Toyo Seiki Seisaku-Sho, Ltd.) as a tester under conditions of a temperature of 25°C, a frequency of 52 Hz, an initial load of 160 g, and a dynamic strain of 2.0%.

(Run-Flat (RF) Durability)

The tested tires were respectively assembled to a rim 71/2J, and a run-flat durability drum test was carried out at an inner pressure of 220 kPa. In this test, a driven distance until the tire went out of order, and the driven distance was indicated as an index assuming that the driven distance of Comparative Example 4 was 100. The more the index, the better the run-flat durability. The evaluated results are shown in Table 2.

(Ride Comfort)

The tested tires were respectively assembled to a rim 71/2J, and then assembled to an actual car at an inner pressure of 220 kPa, and the car was driven in a course including an ordinary road, a gravel road, a stone-paved road, and a road with joints. The ride comfort was evaluated in terms of a ride feeling by an expert driver according to the following criteria:

+2, -2: Moderately good, Moderately poor
+4, -4: Considerably good, Considerably poor
+6, -6: Good, Poor
+8, -8: Very good, Very poor

The ride comfort was evaluated according to the criteria as an index assuming that the ride comfort of the control tire (Comparative Example 4) is 100. The more the index, the better the ride comfort. The evaluated results are shown in Table 2.

[Table 1]

| | | Rubber A | Rubber B |
|---|---|---|---|
| Formulation (parts by weight) | Natural rubber | 30 | 30 |
| | Butadiene rubber | 70 | 70 |
| | Carbon black (FEF) | 50 | 45 |
| | Oil | 3 | - |
| | Thermosetting resin | - | 3 |
| | Sulfur | 5 | 6 |

[Table 2]

| | | | Example1 | Example2 | Comparative Example1 | Example3 | Example4 | Example5 | Comparative Example2 | Comparative Example3 | Comparative Example4 |
|---|---|---|---|---|---|---|---|---|---|---|---|
| Reinforcing rubber layer | Rubber | | A | A | B | B | B | B | B | B | A |
| | E' index | 30°C | 100 | 100 | 100 | 100 | 100 | 100 | 100 | 100 | 100 |
| | | 50°C | 99 | 99 | 98 | 98 | 98 | 98 | 98 | 98 | 99 |
| | | 80°C | 97 | 97 | 99 | 99 | 99 | 99 | 99 | 99 | 97 |
| | α | | -0.05 | -0.05 | -0.10 | -0.10 | -0.10 | -0.10 | -0.10 | -0.10 | -0.05 |
| | β | | -0.07 | -0.07 | 0.03 | 0.03 | 0.03 | 0.03 | 0.03 | 0.03 | 0.07 |
| Carcass ply | Material | | PK fiber | PK fiber | PK fiber | PK fiber | PK fiber | PK fiber | rayon fiber | rayon fiber | rayon fiber |
| | Cord structure | | 1100 dtex/2 | 1100 dtex/2 | 1670 dtex/2 | 1670 dtex/2 | 1670 dtex/2 | 1670 dtex/2 | 1840 dtex/2 | 1840 dtex/2 | 1840 dtex/2 |
| | Total decitex | | 2200 | 2200 | 3340 | 3340 | 3340 | 3340 | 3680 | 3680 | 3680 |
| | Twist coefficient | | 0.62 | 0.79 | 0.26 | 0.44 | 0.62 | 0.79 | 0.54 | 0.75 | 0.75 |
| | Difference in thermal shrinkage stress between 30°C and 80°C (cN/dtex) | | $7.3 \times 10^{-2}$ | $10.7 \times 10^{-2}$ | $2.5 \times 10^{-2}$ | $3.6 \times 10^{-2}$ | $7.3 \times 10^{-2}$ | $10.7 \times 10^{-2}$ | $0.3 \times 10^{-2}$ | $0.4 \times 10^{-2}$ | $0.4 \times 10^{-2}$ |
| Tire | RF durability (index) | | 125 | 158 | 108 | 118 | 161 | 210 | 82 | 96 | 100 |
| | Ride comfort (index) | | 103 | 104 | 102 | 104 | 105 | 106 | 102 | 103 | 100 |

## Claims

1. A pneumatic run-flat radial tire (1) comprising a carcass layer (5); a main belt (8); a tread portion (9); a side wall portion (12); and a reinforcing rubber layer (13), wherein the carcass layer includes at least one radial carcass ply with cords that are substantially radially arranged between a pair of bead cores (3) embedded respectively in a pair of bead portions (2), the main belt is arranged on an outer periphery of a crown portion of the carcass and includes at least two inclined belt layers (7a,7b) each containing cords extending in parallel in an inclined direction with respect to an equatorial plane (E) of the tire, the tread portion is reinforced by the main belt, the side wall portion connects between the tread portion and the bead portions, and the reinforcing rubber layer is arranged in an inner face of the carcass extending at least to the side wall portion and has a substantially crescent cross section, **characterised by** a cord having a difference in thermal shrinkage stress between at 30°C and at 80°C of $3.0 \times 10^{-2}$ cN/dtex or more used as the cords constituting the at least one carcass ply of the carcass layer (5),
the slope $\alpha$ of decreasing rate (%) of the dynamic storage modulus of elasticity E' of the reinforcing rubber layer (13) from 30°C to 50°C satisfying the following condition:

$$\alpha \leq -3.0 \times 10^{-2} [\%]/[deg],$$

and
the slope $\beta$ of decreasing rate (%) of the dynamic storage modulus of elasticity E' of the reinforcing rubber layer (13) from 50°C to 80°C satisfying the following condition:

$$\beta \geq -8.0 \times 10^{-2} [\%]/[deg].$$

2. The pneumatic run-flat radial tire according to claim 1, wherein the cords constituting the at least one carcass ply is a cord containing 50% by mass or more of a polyketone fiber.

3. The pneumatic run-flat radial tire according to claim 2, wherein the polyketone fiber has a tensile strength of 10 cN/dtex or more.

4. The pneumatic run-flat radial tire according to claim 2, wherein the polyketone fiber has an elastic modulus of 200 cN/dtex or more.

5. The pneumatic run-flat radial tire according to claim 2, wherein the polyketone fiber has a thermal shrinkage upon dry heat treatment at 150°C for 30 minutes of from 1% to 5%.

6. The pneumatic run-flat radial tire according to claim 1, wherein a cord having a difference in thermal shrinkage stress between at 30°C and at 80°C of $7.0 \times 10^{-2}$ cN/dtex or more is used as the cords constituting the at least one carcass ply.

## Patentansprüche

1. Run-Flat-Radialluftreifen (1), der aufweist: eine Karkassenlage (5); einen Hauptgürtel (8); einen Laufflächenabschnitt (9); einen Seitenwandabschnitt (12); und eine Verstärkungsgummilage (13), wobei die Karkassenlage mindestens eine radiale Karkasseneinlage mit Korden umfasst, die im Wesentlichen radial zwischen einem Paar von Wulstkernen (3) angeordnet sind, die jeweils in einem Paar von Wulstabschnitten (2) eingebettet sind, wobei der Hauptgürtel auf einem äußeren Umfang eines Zenitabschnittes der Karkasse angeordnet ist und mindestens zwei schräge Gürtellagen (7a, 7b) umfasst, von denen eine jede Korde enthält, die sich parallel in einer schrägen Richtung mit Bezugnahme auf eine Äquatorebene (E) des Reifens erstrecken, wobei der Laufflächenabschnitt durch den Hauptgürtel verstärkt wird, wobei der Seitenwandabschnitt zwischen dem Laufflächenabschnitt und den Wulstabschnitten verbindet, und wobei die Verstärkungsgummilage in einer Innenfläche der Karkasse angeordnet ist, die sich mindestens zum Seitenwandabschnitt erstreckt und einen im Wesentlichen sichelartigen Querschnitt aufweist,
**gekennzeichnet durch** einen Kord, der eine Differenz bei der Wärmeschrumpfspannung zwischen 30 °C und 80 °C von $3{,}0 \times 10^{-2}$ cN/dtex oder mehr aufweist, der für die Korde eingesetzt wird, die die mindestens eine Karkasseneinlage der Karkassenlage (5) bilden;
die Neigung α der Abnahmegeschwindigkeit (%) des dynamischen Speichermoduls der Elastizität E' der Verstärkungsgummilage (13) von 30 °C zu 50 °C, die folgende Bedingung erfüllt:

$$\alpha \leq -3{,}0 \times 10^{-2}\ [\%]/[\mathrm{Grad}];$$

und
die Neigung β der Abnahmegeschwindigkeit (%) des dynamischen Speichermoduls der Elastizität E' der Verstärkungsgummilage (13) von 50 °C zu 80 °C, die folgende Bedingung erfüllt:

$$\beta \geq -8{,}0 \times 10^{-2}\ [\%]/[\mathrm{Grad}].$$

**2.** Run-Flat-Radialluftreifen nach Anspruch 1, bei dem die Korde, die die mindestens eine Karkasseneinlage bilden, ein Kord sind, der 50 Masse-% oder mehr einer Polyketonfaser enthält.

**3.** Run-Flat-Radialluftreifen nach Anspruch 2, bei dem die Polyketonfaser eine Zugfestigkeit von 10 cN/dtex oder mehr aufweist.

**4.** Run-Flat-Radialluftreifen nach Anspruch 2, bei dem die Polyketonfaser einen Elastizitätsmodul von 200 cN/dtex oder mehr aufweist.

**5.** Run-Flat-Radialluftreifen nach Anspruch 2, bei dem die Polyketonfaser eine Wärmeschrumpfung bei einer Trokkenwärmebehandlung bei 150 °C über 30 Minuten von 1 % bis 5 % aufweist.

**6.** Run-Flat-Radialluftreifen nach Anspruch 1, bei dem ein Kord, der eine Differenz bei der Wärmeschrumpfspannung zwischen 30 °C und 80 °C von 7,0 x $10^{-2}$ cN/dtex oder mehr aufweist, für die Korde eingesetzt wird, die die mindestens eine Karkasseneinlage bilden.

**Revendications**

**1.** Bandage pneumatique à roulage à plat (1), comprenant une couche de carcasse (5) ; une ceinture principale (8) ; une bande de roulement (9), une partie de flanc (12) et une couche de renforcement en caoutchouc (13), la couche de carcasse englobant au moins une nappe de carcasse radiale avec des câblés agencés de manière pratiquement radiale entre une paire de tringles (3) noyées respectivement dans une paire de parties de talon (2), la ceinture principale étant agencée sur une périphérie externe d'une partie de sommet de la carcasse et englobant au moins deux couches de ceinture inclinées (7a, 7b), contenant chacune des câblés s'étendant parallèlement dans une direction inclinée par rapport à un plan équatorial (E) du bandage pneumatique, la partie de bande de roulement étant renforcée par la ceinture principale, la partie de flanc étant connectée entre la partie de bande de roulement et les parties de talon, et la couche de renforcement en caoutchouc étant agencée dans une face interne de la carcasse s'étendant au moins vers la partie de flanc et ayant une section transversale pratiquement en croissant, **caractérisé par** des câblés présentant une différence dans la contrainte par retrait thermique, entre 30°C et 80°C, de 3,0 x $10^{-2}$ cN/dtex ou plus, utilisés comme câblés constituant la au moins une nappe de carcasse de la couche de carcasse (5),
l'inclinaison α à taux décroissant (%) du module d'élasticité de stockage dynamique E' de la couche de renforcement en caoutchouc (13), entre 30°C et 50°C, satisfaisant la condition ci-dessous :

$$a \leq -3{,}0 \times 10^{-2}\ (\%)/(\mathrm{deg}),$$

et
l'inclinaison β à taux décroissant (%) du module d'élasticité de stockage dynamique E' de la couche de renforcement en caoutchouc (13), entre 50°C et 80°C, satisfaisant la condition ci-dessous :

$$\beta \leq -8,0 \times 10^{-2} \text{ (\%) (deg)}.$$

**2.** Bandage pneumatique à roulage à plat selon la revendication 1, dans lequel les câblés constituant la au moins une nappe de carcasse sont des câblés contenant 50% en poids ou plus de fibres de polycétone.

**3.** Bandage pneumatique à roulage à plat selon la revendication 2, dans lequel la fibre de polycétone présente une résistance à la traction de 10 cN/dtex ou plus.

**4.** Bandage pneumatique pour roulage à plat selon la revendication 2, dans lequel la fibre de polycétone a un module d'élasticité de 200 cN/dtex ou plus.

**5.** Bandage pneumatique à roulage à plat selon la revendication 2, dans lequel la fibre de polycétone présente un retrait thermique lors d'un traitement thermique à sec à 150° pendant 30 minutes compris entre 1% et 5%.

**6.** Bandage pneumatique à roulage à plat selon la revendication 1, dans lequel des câblés, présentant une différence dans la contrainte par retrait thermique, entre 30°C et 80° C, de 7,0 x $10^{-2}$ cN/dtex ou plus, sont utilisés comme câblés constituant la au moins une nappe de carcasse.

Fig.1

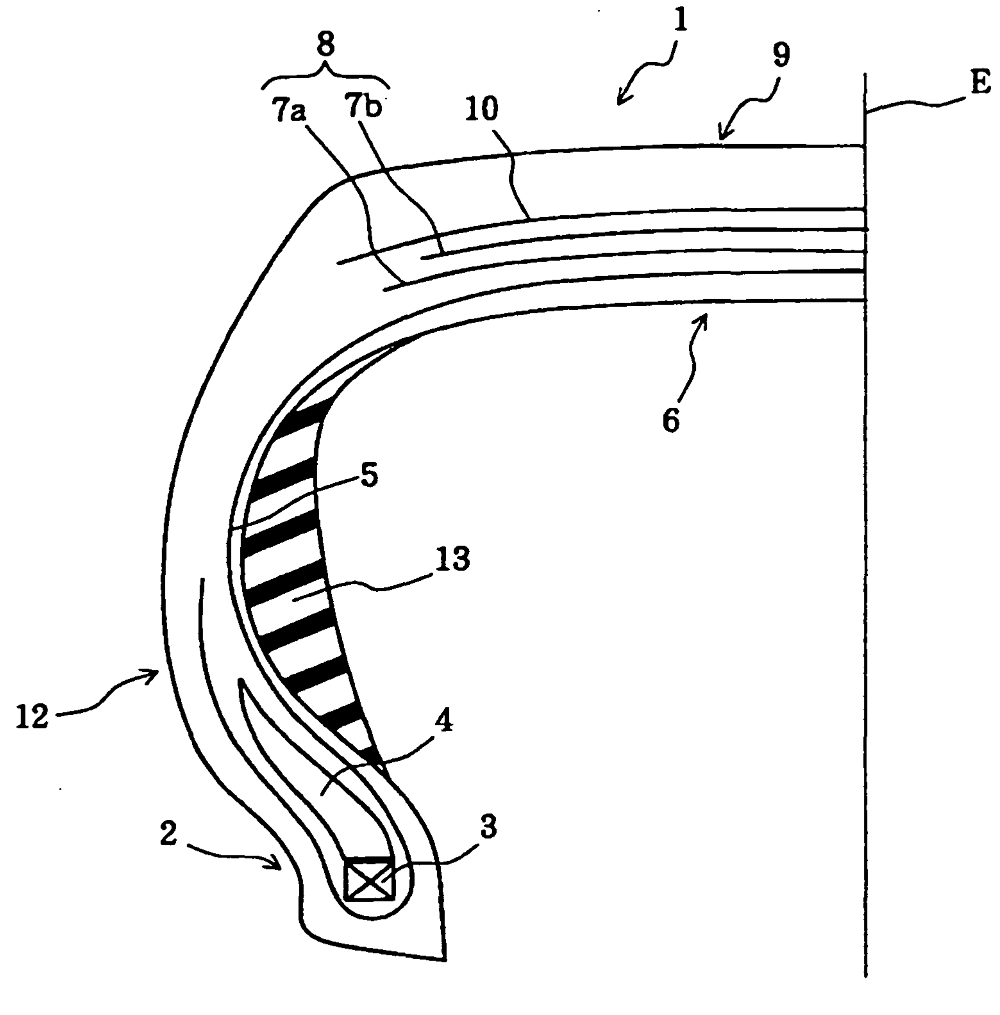

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000309211 A
- DE 4115874 A1
- EP 0963863 A2
- JP 2112413 A
- JP 4228613 A
- JP 4505344 PCT
- WO 9918143 A
- WO 0009611 A
- JP 2001164422 A
- JP 2004218189 A
- JP 2004285221 A